# EUROPEAN PATENT APPLICATION

(11) **EP 4 814 834 A1**
(43) Date of publication of application: **30.09.2026**
(21) Application number: 25305431.6
(22) Date of filing: 25.03.2025
(51) Int. Cl.: G06Q 10/0836, G07F 17/12

(54) **LOCKER BANK SYSTEMS AND METHODS FOR READING MULTI-USAGE INDIVIDUAL IDENTIFYING BADGES**

(71) Applicant: Quadient Shipping, 84140 Avignon (FR)
(72) Inventor: LATU, Yves, 45000 ORLEANS (FR); LANZI, Daniel, REDDING, CT 06896 (US); SALAT, Jérémy, 84470 Châteauneuf de Gadagne (FR)
(74) Representative: Cabinet Beau de Loménie

(57) **Abstract**

A method for dispatching a shipment and picking up the shipment by an individual by operating a locker bank system including a remote server and a locker bank comprising a badge reader configured for reading a badge identifier of an identifying badge, a locker bank data storage, a user interface and at least a locker, wherein the locker bank data storage comprises a structured Individuals table comprising a set of associated memories including a name memory configured to store the name of the individual, an individual identifier memory configured to store an individual identifier identifying the individual, and a badge identifier memory for the badge identifier, wherein the remote server is configured for managing data for operating the locker bank and comprises a set of associated server memories including an individual identifier server memory configured to store the individual identifier provided and managed by a central access system and used by an access management organization for identifying the individual.

## Description

### FIELD OF THE INVENTION

The present invention relates to systems and methods for dispatching shipments into electronic locker banks comprising lockable compartments, and for picking up these shipments thereafter.

### PRIOR ART - BACKGROUND OF THE INVENTION

Locker bank systems are used for dispatching, storing and picking up various kinds of shipments such as parcels or packages. A locker bank comprises a series of compartments or lockers with different sizes, which are equipped with electronically controlled doors. These locker bank systems typically are used by carrier agents to dispatch shipments, which are then picked up from the locker bank by recipients such as customers of businesses sending the shipments. Usually, the locker bank comprises a central processor operating the doors of the different lockers as described in EP3306577. There is also a new generation of locker banks constituted of autonomous lockers or autonomous locker clusters, which are not controlled by a central processor, as described in EP3671670 and EP3671671.

Locker banks can conveniently be used in residential apartment complexes, corporate buildings or university campuses where shipments and mail are handled by a mailroom clerk or a concierge. Shipments can be delivered to the mailroom clerk, who then dispatches the shipments into the lockers of a locker bank. Nowadays, access to services or areas are often controlled by user identifications associated with the environment. For example, on many university campuses, students use a student identification provided by the university for accessing services such as printers, computer services or copy machines, and for accessing restricted areas in the university such as dormitories, classrooms or restaurants. The medium carrying the student identification typically is an electronic badge or a smartphone storing a virtual badge. The possibility for a student to use his student identification for picking up the shipments that he ordered from locker banks installed on the university campus and managed by the campus mailroom would be most convenient. Therefore, there is a need for a locker bank system allowing students to use their student identification for picking up shipments from locker banks.

### OBJECT AND DEFINITION OF THE INVENTION

It is an object of the present invention to at least substantially overcome or ameliorate at least one or more of the above disadvantages. The invention can apply to students receiving shipments on a campus as described above or more generally to individuals receiving shipments in an environment such as residential apartment complexes, hospitals or corporate buildings where these individuals use an identifying badge for accessing restricted areas or services in this environment. The identifying badge and a unique individual identifier are provided to the individual by an access management organization, for example a university. The identifying badge is used by the individual for accessing restricted areas controlled by the access management organization. The individual identifier is used by the access management organization for identifying the individual.

This object is achieved by providing a method for dispatching a shipment and picking up the shipment by an individual by operating a locker bank system including a remote server and a locker bank comprising a badge reader configured for reading a badge identifier of an identifying badge, a locker bank data storage, a user interface and at least a locker, wherein the locker bank data storage stores a structured Individuals table comprising a set of associated memories including a name memory configured to store the name of the individual, an individual identifier memory configured to store an individual identifier identifying the individual, and a badge identifier memory for the badge identifier, wherein the remote server is configured for managing data for operating the locker bank and comprises a set of associated server memories including an individual identifier server memory configured to store the individual identifier provided and managed by a central access system and used by an access management organization for identifying the individual.

The remote server is a computer or at least a computerized system, in other words, a computerized remote server. The badge reader is an equipment such as a machine-readable symbol reader, a wireless transponder interrogator such as an RFID interrogator, an NFC reader or a radio. The locker bank data storage can be a locker bank processor-readable storage or a non-transitory processor-readable locker bank data storage.

The method comprises the following steps for dispatching the shipment in the locker bank:
- capturing, preferably with a scanner, a shipment identifier associated with the shipment,
- selecting, preferably with the scanner, from the structured Individuals table a name of the individual for which the shipment is intended to, and identifying the name memory storing the name of the individual,
- storing the captured shipment identifier in a shipment identifier memory in locker bank data storage and associating, i.e. logically associating, by at least one processor, via at least one element of at least one data structure stored in memory, the shipment identifier memory with the individual identifier memory associated with the identified name memory,
- opening a locker, in which the shipment is dispatched,
- associating the shipment identifier memory with the opened locker, i.e. logically associating, by at least one processor, via at least one element of at least one data structure stored in memory.

The step of opening the locker comprises an automatic unlocking of the compartment door together with a slight opening of the door thanks to a locking system with a latch, a piston, an electric motor and a spring. And then said step of opening comprises having a user opening completely the door to dispatch a parcel in the compartment before closing the manually until it locks automatically and autonomously.

The method further comprises the following steps for picking up the shipment from the locker bank:
- reading the identifying badge by the badge reader when the individual presents the identifying badge to the locker bank, and capturing the badge identifier embedded in the identifying badge,
- identifying the badge identifier memory storing the badge identifier read by the badge reader,
- identifying the shipment identifier memory based on the association with the individual identifier memory and based on the individual identifier memory being associated with the badge identifier memory, and
- unlocking the locker based on the association of the locker with shipment identifier memory.

The steps for picking up the shipment from the locker bank is realized at least by one processor.

The step of unlocking the locker comprises automatically or autonomously unlocking a door of the locker.

In a first aspect of the method, the method can further comprise the following steps for picking up the shipment from the locker bank if no badge identifier memory storing the badge identifier is identified:
- entering an individual identifier by the individual via the user interface, and
- verifying a match between the entered individual identifier and the individual identifier stored in the individual identifier memory.

According to a feature of the invention, the method can further comprise the following steps:
- entering a unique pick-up code received by the individual in a notification email for retrieving the shipment from the locker bank,
- verifying a match between the entered pick-up code and a pick-up code generated following on the completion of dispatching the shipment of the individual and stored in a pick-up code memory of the locker bank data storage,
- storing by the locker bank the captured badge identifier in the badge identifier memory based on the association with the individual identifier memory, wherein if a badge identifier corresponding to a previous identifying badge is already stored in the badge identifier memory, the previous badge identifier is over-written with the new badge identifier,
- sending by the locker bank the badge identifier stored in the badge identifier memory and the individual identifier stored in the individual identifier memory associated with the badge identifier memory to the remote server communicating with the locker bank via a long-distance communication network, and
- identifying by the remote server an individual identifier server memory storing a value identical to the received individual identifier and stores the received badge identifier in a badge identifier server memory associated with the individual identifier server memory.

According to another feature of the invention, the method can further comprise the following steps for dispatching the shipment in the locker bank:
- generating by the locker bank the pick-up code,
- storing the pick-up code in the pick-up code memory,
- associating the pick-up code memory with the locker, in which the shipment has been dispatched,
- sending to the remote server a message acknowledging the successful dispatch including the shipment identifier, the pick-up code and the individual identifier, and
- associating by the remote server based on the sent message the individual identifier server memory storing the unique individual identifier used by the access management organization for identifying the individual with a shipment identifier server memory storing the shipment identifier, therefore registering that the dispatched shipment is to be picked up by the individual.

In a preferred embodiment, the method can further comprise sending by the remote server or by the central access system, which has received the dispatch information for the shipment from the remote server, the notification email to the individual based on the association of the shipment identifier server memory with an individual email server memory configured to store an email address of the individual and included in the set of associated server memories, via the association of the shipment identifier server memory with the individual identifier server memory, wherein the notification email includes the pick-up code for the individual to pick up his shipment.

The method can also further comprise for dispatching the shipment in the locker bank the following step of associating by the remote server the shipment identifier server memory and the locker bank identifier memory, therefore registering the dispatch of the shipment in the locker bank.

The notification email can comprise information that the shipment is ready for pick up in the locker bank based on the association of the shipment identifier server memory with the locker bank identifier memory.

The pick-up code can be provided in the notification email in the form of a pick-up barcode readable by a scanner of the locker bank.

The method can also further comprise following on picking up the shipment by the individual:
- sending by the locker bank to the remote server an information message regarding the pick-up and including the shipment identifier, the individual identifier and the badge identifier, and
- if a second shipment identifier is associated with the individual identifier, in response to closing the closing of the locker, unlocking a second locker associated with the second shipment identifier.

The method can also comprise:
- transferring from a central access system managing information of the individual to the remote server via the long-distance communication network a data file including the name of the individual, the email address of the individual and the individual identifier used by the access management organization for identifying the individual, and
- storing the name of the individual provided by the access management organization in a name server memory, the email address of the individual provided by the access management organization in the individual email server memory, and the individual identifier provided and managed by the central access system in the individual identifier server memory, wherein the name server memory, the individual email server memory, the individual identifier server memory, and the badge identifier server memory are comprised in a digital server storage of the remote server.

Another object of the invention is to provide a locker bank system for dispatching a shipment and picking up the shipment by an individual, the locker bank system including:
a locker bank comprising a locker bank data storage, a user interface and at least a locker, and
a remote server managing data for operating the locker bank and comprising a server storage and communicating with the locker bank via a long-distance communication network, and with a central access system of an access management organization,
characterized in that the locker bank further comprises a badge reader configured for reading a badge identifier of an identifying badge, which is used by the individual for accessing restricted areas controlled by the access management organization and therefore can simplify the picking up of shipments from the locker bank by the individual. The identifying badge can be presented on the badge reader by the individual in the same way as it can be presented on an access device controlled by the access management organization,
in that the server storage comprises a set of associated memories including a name server memory configured to store a name of the individual, an individual email server memory configured to store an email address of the individual, an individual identifier server memory configured to store an individual identifier provided and managed by the central access system and used by the access management organization for identifying the individual, and a badge identifier server memory for the badge identifier embedded in the identifying badge used by the individual,
and in that the locker bank data storage comprises a structured Individuals table comprising a set of associated memories including a name memory configured to store the name of the individual, an individual identifier memory configured to store the individual identifier, and a badge identifier memory for the badge identifier.

In a particular embodiment of the locker bank system, the locker bank can comprise a processor configured to capture a shipment identifier associated with the shipment, to select from the structured Individuals table a name of the individual for which the shipment is intended to, to identify the name memory storing the name of the individual, to store the captured shipment identifier in a shipment identifier memory in locker bank data storage and associating the shipment identifier memory with the individual identifier memory associated with the identified name memory, to open a locker, in which the shipment is dispatched, and to associate the shipment identifier memory with the opened locker.

In another particular embodiment of the locker bank system, the processor can be configured to identify the badge identifier memory storing the badge identifier captured by the badge reader, to identify the shipment identifier memory based on the association with the individual identifier memory and based on the individual identifier memory being associated with the badge identifier memory, and to unlock the locker based on the association of the locker with shipment identifier memory. The identifying badge can be supplied to the access management organization by a third-party solution provider, wherein the badge identifier is managed by the third-party solution provider and unknown from the access management organization. If no badge identifier memory storing the badge identifier is identified by the controller, the badge identifier can be retrieved by the processor of the locker bank configured to perform a self-registration procedure as described below.

In another particular embodiment of the locker bank system, the processor can be configured to be provided by the individual with an individual identifier via the user interface and to verify a match between the entered individual identifier and the individual identifier stored in the individual identifier memory.

In another embodiment, the processor can be configured to receive a unique pick-up code from the individual, to verify a match between the received pick-up code and a pick-up code generated following on the completion of dispatching the shipment of the individual and stored in a pick-up code memory of the locker bank data storage to store the captured badge identifier in the badge identifier memory based on the association with the individual identifier memory, wherein if a badge identifier corresponding to a previous identifying badge is already stored in the badge identifier memory, the previous badge identifier is over-written with the new badge identifier, and to send the badge identifier stored in the badge identifier memory and the individual identifier stored in the individual identifier memory associated with the badge identifier memory to the remote server communicating with the locker bank via the long-distance communication network.

The processor can also be configured to request the remote server to send an email to the individual, wherein the requesting includes the individual identifier, to receive from the remote server a validation code generated by the remote server, following on identifying by the remote server the individual identifier server memory storing a value matching the individual identifier included in the request from the locker bank, to receive from the individual a validation code sent by the remote server to the individual using the individual email server memory associated with the individual identifier server memory, to store by the captured badge identifier read by the badge reader in the badge identifier memory based on the association with the individual identifier memory, wherein if a badge identifier corresponding to a previous identifying badge is already stored in the badge identifier memory, the previous badge identifier is over-written with the new badge identifier, and to send to the remote server the badge identifier stored in the badge identifier memory and the individual identifier stored in the individual identifier memory associated with the badge identifier memory. The processor can be configured to generate the pick-up code, to store the pick-up code in the pick-up code memory, to associate the pick-up code memory with the locker, in which the shipment has been dispatched, and to send to the remote server a message including the shipment identifier, the pick-up code and the individual identifier, wherein the sent message is used by the remote server to associate a shipment identifier server memory storing the shipment identifier with the individual identifier server memory storing the individual identifier used by the access management organization for identifying the individual.

The badge reader can be contactless, and the badge identifier can be unique.

The identifying badge can be unique and be a virtual badge stored in a smartphone, or an electronic badge integrated in or in the form of a physical individual card.

### BRIEF DESCRIPTION OF THE DRAWINGS

Other aspects, features and advantages of the teachings of the invention will become clearer to those ordinary skilled in the art upon review of the following description in conjunction with the accompanying drawings where:
Figure 1 illustrates a locker bank system embodying the present invention;
Figure 2 illustrates a process according to the present invention for setting-up a locker bank system for dispatching shipments in a locker bank and allowing recipients to pick up shipments from the locker bank;
Figure 3 illustrates a process for dispatching shipments in a locker bank according to the present invention;
Figure 4 shows how a shipment recipient can pick-up his shipment from a locker bank according to the present invention;
Figures 5a illustrates a process of self-registration required when a badge identifier cannot be identified by a locker bank according to a first embodiment of the invention;
Figures 5b illustrates a process of self-registration required when a badge identifier cannot be identified by a locker bank according to a second embodiment of the invention.

### DETAILLED DESCRIPTION

According to the invention, a badge reader is integrated in a locker bank for reading either a physical student card or a virtual badge on smartphone.

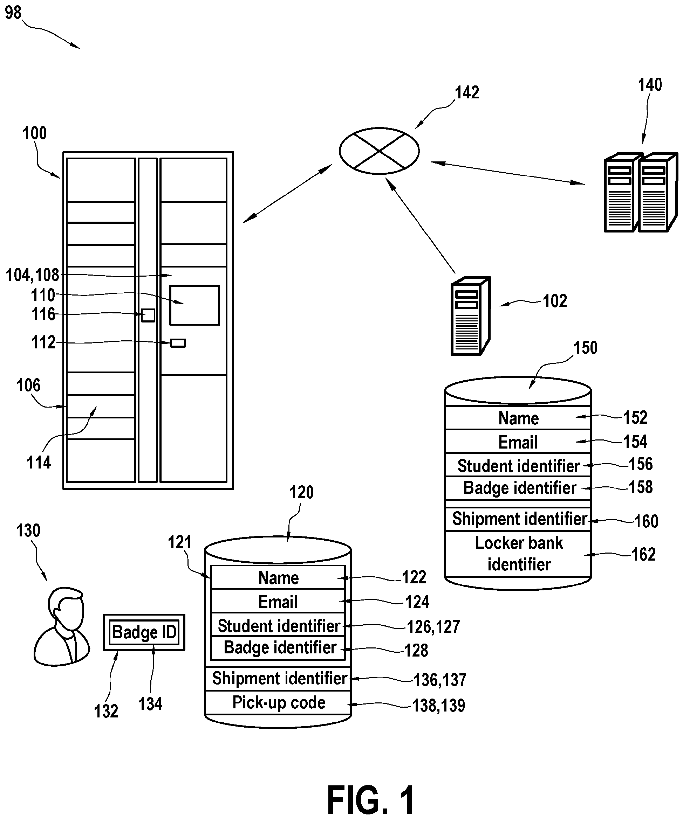

Figure 1 illustrates an embodiment of a locker bank system 98 of the invention including at least one locker bank 100 and a remote server 102 managing data for operating the locker bank 100. The locker bank 100 comprises a processor 104 controlling the operation of the locker bank, and a series of shipment lockers 106, which can contain shipments dispatched by an agent, typically a university agent, for being picked-up by recipient. Each locker is equipped with a door electronically controlled by the processor. The processor is located in a control module 108, which provides a user interface 110 on its front side. The user interface directly communicates with the processor. In some embodiments of the invention, the user interface may be distant from the locker bank on a stand near the locker bank or on a mobile device such as a PDA (personal digital assistant) or a smartphone communicating with the processor. The locker bank includes a scanner 112 near the user interface for scanning codes on shipping labels affixed onto shipments or provided on mobile devices or on paper supports. The scanner is a convenient feature for capturing shipment identifiers used for identifying and tracking shipments. Shipment identifiers can also be entered manually via the user interface. The lockers are equipped with doors 114 electronically controlled by the processor. The lockers doors face the users of the locker bank and form a wall of doors. For the shipments dispatching into the locker bank, a mailroom clerk can use the user interface for operating the locker bank. Following on a shipment dispatch in the locker bank, the shipment recipient receives an email notifying him that he must pick up his shipment in the locker bank. A shipment recipient also can use the user interface for identification for accessing the locker bank and for picking up his shipment. In order to simplify the picking up of shipments for students in universities, a badge reader 116 is integrated in the locker bank for reading either a physical student card or a virtual badge on the student smartphone. In a preferred embodiment, the badge reader is located close to the user interface 110 and is a contactless badge reader.

The control module 108 also comprises a digital locker bank data storage 120, which is controlled by the processor 104. It is to be understood that the term storage, generically used in the overall description of the different embodiments of the invention, may correspond to different memories as well as different types of memories including ROM, hard drive, flash drive, or the like and databases. The locker bank data storage stores data for operating the locker bank including locker identifiers corresponding to each locker of the locker bank and shipment identifiers corresponding to each shipment dispatched in lockers of the locker bank. The locker bank data storage also comprises a structured Students table 121 referencing all the students authorized to use the locker bank for picking up their shipments. For each student authorized to use the locker bank, the Students table comprises a set of memories associated together including a name memory 122 storing the name of the student, a student email memory 124, a student identifier memory 126 for storing a student identifier 127 provided by the university and used by the university for identifying the student, and a badge identifier memory 128 for a badge identifier embedded in a badge used by the student.

The university provides every student 130 with a unique identifying badge 132, which can be a virtual badge stored in a smartphone, or an electronic badge integrated in or in the form of a physical student card. The student can use the identifying badge for accessing university services and for opening doors to campus areas. Generally, the identifying badges 132 are provided to the university by a third-party solution provider, who also provides access solutions for opening doors on the university premises or for operating university services. A unique badge identifier 134 is embedded in each identifying badge and is managed by the third-party solution provider. When the student 130 presents identifying badge 132 on the badge reader 116 in the same way as it can be presented on an access device on the campus for accessing a campus service, the badge identifier 134 is read and transferred by the badge reader to the processor 104 for providing access to the locker bank. The badge identifier 134 read by the badge reader 116 is compared by the processor with the value stored in the badge identifier memory 128 for allowing the shipment pick up. The university generates a unique student identifier, which is associated with each student and each corresponding identifying badge. However, generally, the badge identifier 134 is not known by the university. The value stored or to be stored in the badge identifier memory 128 needs to be provided by the third-party solution provider, which can be costly, or can be retrieved thanks to a self-registration procedure as described further below.

When the mailroom clerk dispatches a shipment in the locker bank, a shipment identifier 136 attached to the shipment is scanned with the scanner 112 and stored in a shipment identifier memory 137 of the locker bank data storage 120. Then, the Students table is used for the mailroom clerk to select the student's name corresponding to the dispatched shipment, and therefore to associate the shipment identifier 136 with the student identifier 127. Based on this association, the student will then be able to pick up his shipment in the locker bank by simply having his badge identifier read.

The remote server 102 communicates with a university server system 140 via a long-distance communication network. The university server system includes a data system compiling and managing the information of the university students, in particular relatively to student access rights. The university server system can include a tracking system for parcels dispatched to students and the tracking system can provide notification capabilities, for example to notify students that a shipment is available for pick up in a locker bank. Often, the tracking system is provided and eventually managed by a third-party solution provider, who can also provide access solutions on the university premises, and the tracking system communicates with the university data system. The university server system provides student information to the remote server including, for each student, his name, his email address and his student identifier. This student information can be transferred in the form of a flat file using a File Transfer Protocol (FTP) or via a manual upload. Regular updates need to be scheduled. For applications other than for universities, for example for corporate buildings or for residential apartment complexes, employee information and identification or resident information and identification would be provided.

The remote server 102 manages authorization access to multiple locker banks, information relative to the shipments dispatched in the locker banks and statuses of the locker banks. Data exchange between the locker bank 100 and the remote server is performed directly via a long-distance communication network 142 based on technology such as 3G-4G GSM. Data generated by and/or initially stored in the remote server, such as identifiers or information relative to shipments dispatched in the locker bank, can be transmitted to the locker bank. Inversely, the locker bank can report operational events and captured data to the remote server 102. Data for the remote server is stored in a digital server storage 150 comprised in the remote server. The digital server storage comprises a structured server Students table referencing all the students authorized to use the locker bank 100 for picking up their shipments. For each student authorized to use the locker bank, the server Students table comprises a set of memories associated together including a name server memory 152 storing the name of the student, a student email server memory 154 storing the email address of the student, a student identifier server memory 156 storing the unique student identifier used by the university for identifying the student, and a badge identifier server memory 158 for a badge identifier embedded in a badge used by the student. Values stored in the name server memory, in the student email server memory and in the student identifier server memory are initially received from the university server system 140 and can be thereafter provided by the remote server 102 to the locker bank 100 via the long-distance communication network 142. In the badge identifier server memory 158 can be stored a value received from the third-party solution provider or from the locker bank 100 following on a self-registration as described further below. When a shipment has been dispatched for the student in the locker bank 100, a shipment identifier uniquely identifying the shipment is stored in a shipment identifier server memory 160 of the server storage 150. A locker bank identifier uniquely identifying the locker bank 100 is stored in a locker bank identifier memory 162 of the server storage 150. To register the dispatch of the shipment in the locker bank 100, the shipment identifier server memory 160 and the locker bank identifier memory 162 are associated. To register that the dispatched shipment is to be picked up by the student 130, the associated shipment identifier server memory 160 and locker bank identifier memory are associated with the set of memories associated together including the name server memory 152, the student email server memory 154, the student identifier server memory 156, and the badge identifier server memory 158.

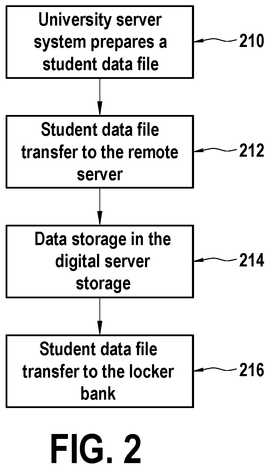

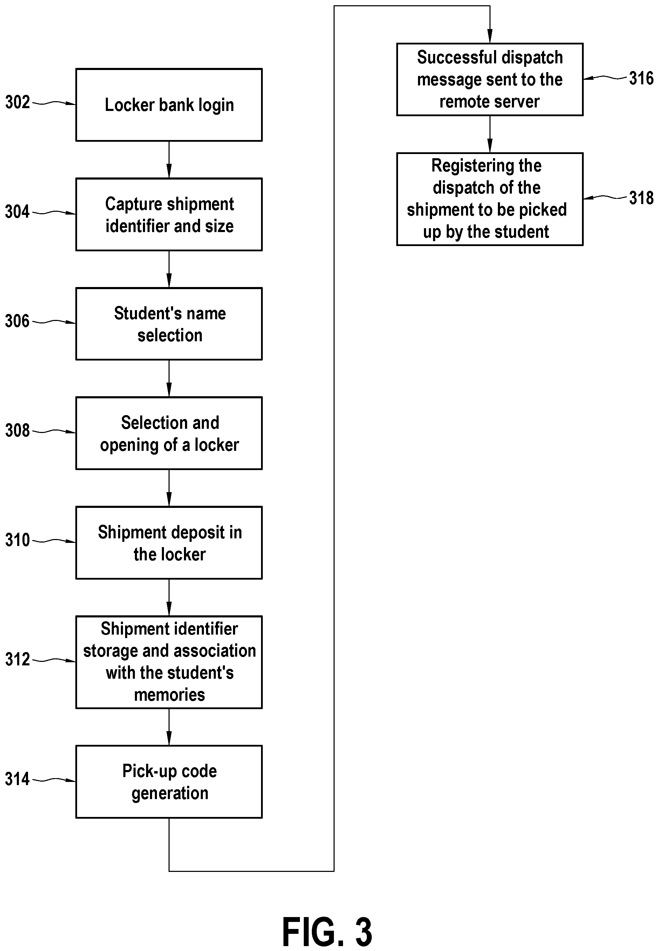

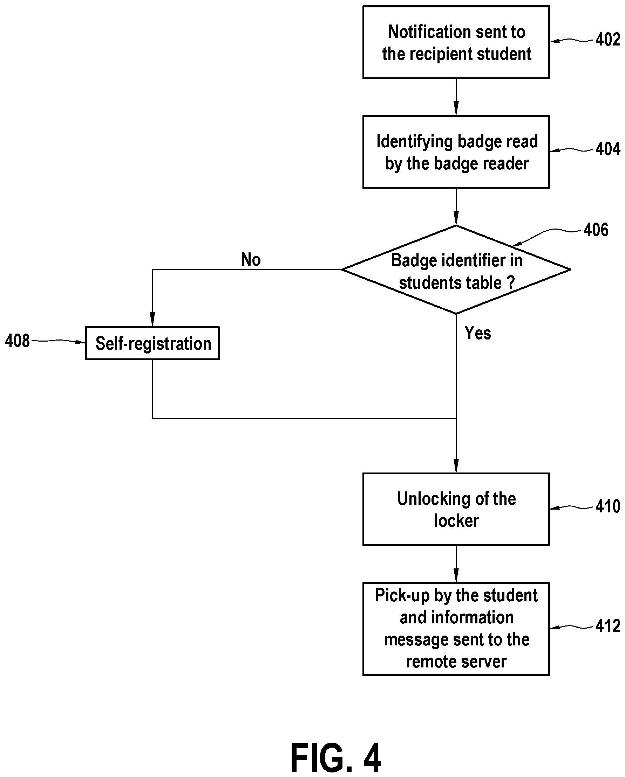

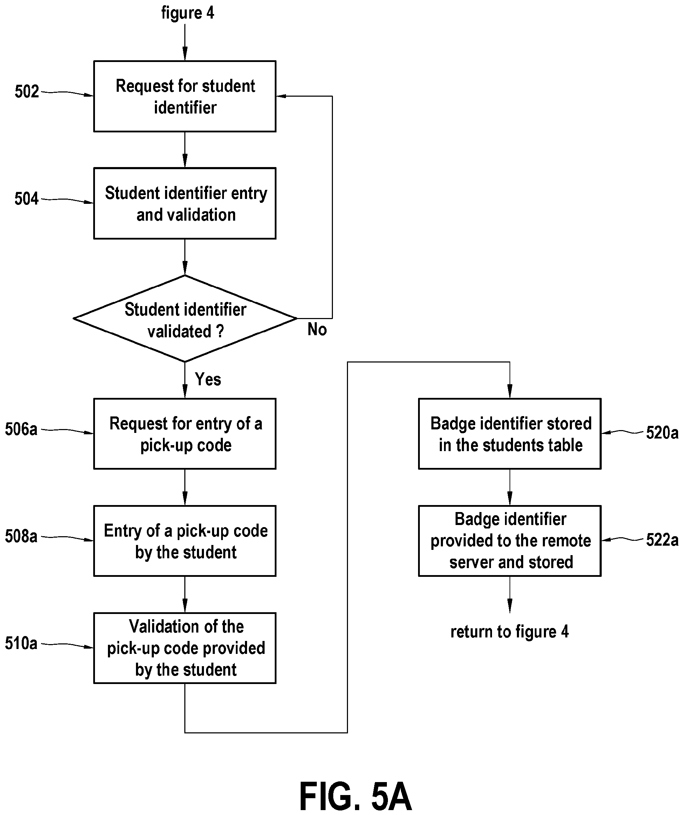

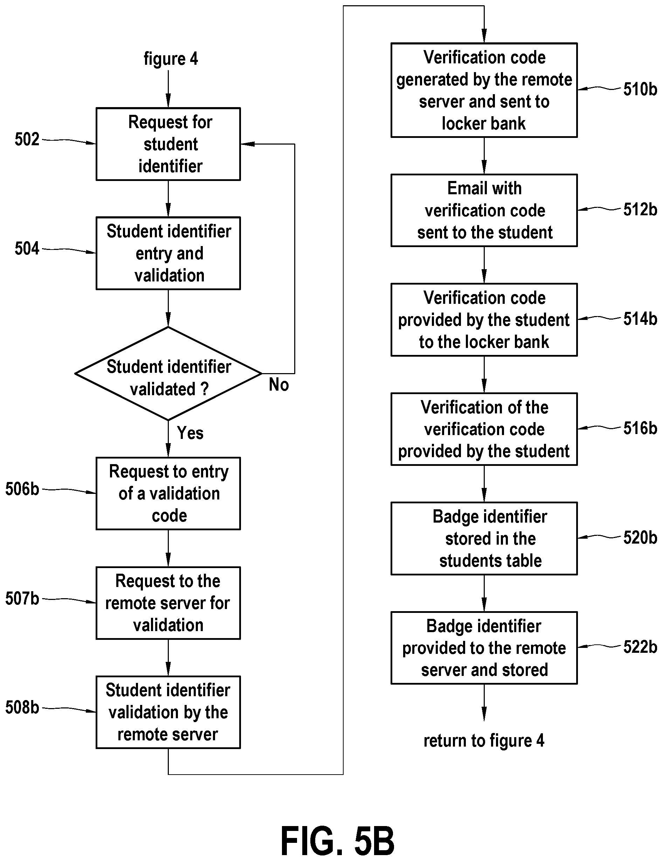

A method according to the invention using the locker bank system described above is now detailed in reference to figures 2, 3, 4, 5a and 5b. Figure 2 describes the steps for preparing a locker bank system for dispatching shipments in a locker bank and allowing students to pick up shipments from the locker bank, and figure 3 describes the steps for dispatching shipments in a locker bank. Figure 4 describes how a shipment recipient can pick-up his shipment from a locker bank. Figures 5a and 5b illustrate a self-registration required when a badge identifier read by a locker bank cannot be matched by the locker bank during a shipment pick-up.

Referring to figure 2, the process starts in step 210 with the university server system 140 preparing a data file including necessary student information for the locker bank system to be operated by university students authorized to use the locker bank 100 for picking up their shipments. The data file includes, for each student, his name, his email address and his student identifier used by the university for identifying the student. In step 212, the data file is transferred from the university server system 140 to the remote server 102 via the long-distance communication network 142. The transfer can be initiated by a request from the remote server 102 or can be initiated by a manual upload operated from the university server system 140. In step 214, data of the data file are stored in the digital server storage 150 including, for each student, the student's name, the student's email address and the student identifier, which are stored in a structured Students table of the digital server storage respectively in the name server memory 152, in the student email server memory 154, and in the student identifier server memory 156. In step 216, for each student authorized to use the locker bank 100, the student's name and the student identifier are transferred from the remote server 102 to the locker bank 100 via the long-distance communication network 142. This transfer is initiated by the remote server, which preferably performs a block data transfer for all the students authorized to use the locker bank 100. The block data transfer is eventually split into successive messages sent by the remote server to the locker bank 100. For each student authorized to use the locker bank 100, the student's name and the student identifier 127 are stored the name memory 122 and the student identifier memory 126, which are part of a set of memories associated together including the badge identifier memory 128 for the badge used by the student. Regularly, the university server system 140 can perform updates of the student information following on student removal or addition or student information change for example and can transfer an updated data file to the remote server 102, which then transfers the updated data to the locker bank 100.

Figure 3 illustrates an embodiment of the invention for the dispatching of shipments in the locker bank by a university agent. Shipments for students are delivered by carriers to the university mailroom. Then, the university mailroom clerk brings the shipments to the locker bank 100 for dispatch. Preferably, the clerk performs a login for accessing the locker bank 100 (step 302). The login can be performed via any means known in the art such as an identifier entry via the user interface 110 (for example by keying the identifier on the user interface) or a clerk identification barcode read by the scanner 112. Following on the clerk login, the user interface 110 can request the clerk to scan a shipment identifier of a first shipment.

In step 304, the clerk captures a shipment identifier attached to a shipment to be dispatched in the locker bank 100 with the scanner 112 or eventually by entering manually the shipment identifier via the user interface 110. The size of the shipment may be captured by the scanner at the same time as the shipment identifier or may need to be entered separately via the user interface 110. In step 306, following on a successful capture of the shipment identifier, a student, for which the shipment is intended to, is selected from the structured Students table 121. For this student selection, the clerk can enter via the user interface 110 a recipient's name, which he can read on the shipment label. Then, the locker bank processor 108 identifies a name memory 122 storing a same student name. In a preferred embodiment, the locker bank displays a list of names of the students, which are stored in the students list 121, and the cleck can select from this displayed list the recipient's name, which he can read on the shipment label. Alternatively, if the recipient's name is included with the shipment identifier on the shipment label, it can be scanned with the scanner 112 or the recipient's name can be captured on the shipment label by some text recognition technology such as OCR. In step 308, following on a successful selection of the recipient's name and identification of the corresponding name memory 122, the locker bank selects a locker in which the shipment can be dispatched, according to preset rules including at least the following: the locker is empty, and the comportment size matches the shipment size. Other rules for selecting a locker for dispatch may include a rotation rule amongst the lockers for ensuring a homogeneous usage of the lockers to prevent an early wear of any particular locker. And the locker bank opens the door of the selected locker. In step 310, the clerk dispatches the shipment in the locker, closes the locker door, which is automatically locked, and the locker bank detects the closing and locking of the door.

In step 312, following on the detection of the closing and locking of the locker door or alternatively following on the validation by the clerk of the dispatch of the shipment into the locker via the user interface 110, the locker bank stores the captured shipment identifier in a shipment identifier memory 137 and associates the shipment identifier memory 137 with the student identifier memory 126 (or alternatively with the set of associated memories including the name memory 122, the associated student identifier memory 126, and the associated badge identifier memory 128) and associates the shipment identifier memory 137 with the locker 106 in which the shipment has been dispatched. In step 314, the locker bank generates a unique pick-up code 138, which can be used by the recipient student for picking up his shipment, and the locker bank stores the pick-up code in the locker bank data storage 120 a pick-up code memory 139. The locker bank associates the pick-up code memory 139 with the locker, in which the shipment has been dispatched. In step 316, the locker bank sends to the remote server a message acknowledging the successful dispatch with an associated information including the shipment identifier 136, the pick-up code 138 and the student identifier 127. In step 318, based on the acknowledgement message, the remote server associates a shipment identifier server memory 160 storing the shipment identifier with the student identifier server memory 156 storing the unique student identifier used by the university for identifying the student (or alternatively with the set of associated memories including the name server memory 152 storing the name of the student, the student email server memory 154 storing the email address of the student, the student identifier server memory 156 storing the unique student identifier used by the university for identifying the student, and the badge identifier server memory 158 for the badge used by the student), therefore registering that the dispatched shipment is to be picked up by the student 130. The remote server also associates the shipment identifier server memory 160 with a locker bank identifier memory 162 storing the locker bank identifier uniquely identifying the locker bank 100, therefore registering the dispatch of the shipment in the locker bank 100. As long as some shipments remain for dispatch in the locker bank 100, the clerk can resume with step 304 (capture of a parcel identifier) and proceeds with the following steps up to step 316. Once the dispatch of all shipments is completed the locker bank may combine the messages acknowledging each successful dispatch into a grouped message.

Once the student's shipment is dispatched in the locker bank, a process for the student to pick up the shipment can take place and is illustrated by figure 4. In step 402, following on the receiving by the remote server of the message acknowledging the successful dispatch of the shipment in the locker bank 100, the remote server sends a notification email to the student based on the association of the shipment identifier server memory 160 with the student email server memory 154, eventually via the association of the shipment identifier server memory 160 with the student identifier server memory 156. The notification email informs the student that his shipment is ready for pick up in the locker bank 100 based on the association of the shipment identifier server memory 160 with the locker bank identifier memory 162. The notification email also includes the pick-up code for the student to pick up his shipment and preferably provides in addition the pick-up code in the form of a pick-up barcode, which can be read by the scanner 112 of the locker bank. In another embodiment, the notification is sent by the university server system 140, which has received the dispatch information for the shipment from the remote server. In step 404, the student can then go to the locker bank 100 and present his identifying badge 132, which is read by the badge reader 116. The embedded badge identifier 134 is captured and transferred by the badge reader to the processor 104, and it is compared to the contents of badge identifier memories 128 as it is searched within the Students table 121 (step 406). If the badge identifier is found within the Students table and the controller has identified the badge identifier memory 128 corresponding to the badge identifier 134 read by the badge reader 116 in step 408, the process continues to step 410. If the badge identifier is not found within the Students table step 408, the locker bank performs a self-registration (see below figures 5a and 5b) before continuing to step 410. In step 410, based on the identified badge identifier memory 128 corresponding to the badge identifier 134 read by the badge reader 116, the controller identifies the student identifier memory 126 associated with the badge identifier memory 128 and the shipment identifier memory 137 associated with the student identifier memory 126. Based on the shipment identifier 136 stored in the associated shipment identifier memory 137, the controller unlocks the door of the corresponding associated locker of the locker bank 100. Preferably, the door automatically opens thanks for example to a spring-loaded mechanism. In step 412, the student picks-up the shipment and closes the locker door. The locker bank sends to the remote server an information message regarding the pick-up and including the shipment identifier 136, the student identifier 136 and the badge identifier. If a second shipment identifier is associated with the student identifier 126, in response to closing the closing of the locker, the locker bank unlocks a second locker associated with the second shipment identifier and step 412 is repeated.

Following on the reading by the badge reader 116 of the identifying badge 132 of the student who wants to pick-up his shipment from the locker bank 100, if a value of the badge identifier 134 is not found within the Students table 121, the locker bank performs a self-registration as illustrated by figure 5a or 5b. The badge identifier may not be found within the Students table because the university has not provided it to the remote server 102 (the badge identifier is not known by the university) and it is the first time that the student tries to use the locker bank or the student has lost his identifying badge (student card or smartphone lost) card and the university has just provided the student with a new identifying badge.

The self-registration is based on a double verification based on the student identifier and the pick-up code or a validation code. Referring to figure 5a, in step 502, the locker bank requests via the user interface 110 to be provided with a student identifier. In step 504, the student enters his student identifier received from the university via the user interface. The locker banks verifies that the entered student identifier matches a value in a student identifier memory 126 of the Students table 121 (i.e. the a student identifier 127).

In a first embodiment of the invention, in step 506a, following on a successful verification of the student identifier (i.e. a successful match of the student identifier), the locker bank requests via the user interface 110 to be provided with a pick-up code sent to the student for retrieving his shipment from the locker bank 100. In step 508b, student enters the pick-up code received in the notification email via the user interface 110 or scans the pick-up barcode displayed on his smartphone or printed on paper. In step 510b, the locker bank compares the pick-up code entered by the student with the pick-up code stored in the pick-up code memory 139, which it generated at the time of completion of the dispatch of the student's shipment. In step 520a, following on a successful validation of the pick-up code entered by the student, the locker bank stores the value of the badge identifier 134 read by the badge reader 116 in a badge identifier memory 128 associated with the student identifier memory 126. If a badge identifier corresponding to a previous identifying badge (for example which has been lost or stolen) is already stored in the badge identifier memory 128, the controller over-writes the previous badge identifier with the new badge identifier. In step 522a, the locker bank sends the badge identifier stored in a badge identifier memory 128 and the student identifier 127 stored in the student identifier memory 126 associated with the badge identifier memory 128 to the remote server 102. This sending preferably takes place immediately after the storing of the badge identifier in the badge identifier memory 128 or it can take place with the information message sent to the remote server after the completion of the pick-up. Upon receiving the badge identifier and the associated student identifier, the remote server identifies a student identifier server memory 156 storing a value identical to the received student identifier and stores the received badge identifier in a badge identifier server memory 158 associated with the student identifier server memory 156.

In second embodiment of the invention, referring to figure 5b (where steps 502 and 504 are identical to figure 5a), in step 506b, following on a successful validation of the student identifier (i.e. a successful match of the student identifier), the locker bank requests via the user interface 110 to be provided with a validation code that is going to be sent to the student. In step 507b, the locker bank provides the remote server 102 with the student identifier 127 and requests the remote server to send an email to the student for validation. In step 508b, the remote server verifies that the student identifier provided by the locker bank 100 matches a value in a student identifier server memory 156 of the server Students table. This validation prevents unauthorized access to the locker bank in case an update of the server Students table had been provided by the university, but the update had not yet been provided to the locker bank 100 via for example a synchronization between the remote server and the locker bank. In step 510b, following on a successful validation of the student identifier by the remote server, the remote server generates a validation code and sends the validation code to the locker bank. In step 512b, the remote server sends a verification email to the student's email address stored in a student email server memory 154 associated with the student identifier server memory 156. The verification email includes the validation code written in an alphanumerical form and preferably also in a barcode form. In step 514b, following on the reception of the email by the student, the student enters the validation code via the user interface 110 or scans the verification barcode displayed on his smartphone or printed on paper. In step 516b, the locker bank compares the validation code entered by the student with the validation code received from the remote server. In step 520b, following on a successful validation of the validation code entered by the student, the locker bank stores the value of the badge identifier 134 read by the badge reader 116 in a badge identifier memory 128 associated with the student identifier memory 126. If a badge identifier corresponding to a previous identifying badge (for example which has been lost or stolen) is already stored in the badge identifier memory 128, the controller over-writes the previous badge identifier with the new badge identifier. In step 522b, the locker bank sends the badge identifier stored in a badge identifier memory 128 and the student identifier 127 stored in the student identifier memory 126 associated with the badge identifier memory 128 to the remote server 102. This sending preferably takes place immediately after the storing of the badge identifier in the badge identifier memory 128 or it can take place with the information message sent to the remote server after the completion of the pick-up. Upon receiving the badge identifier and the associated student identifier, the remote server identifies a student identifier server memory 156 storing a value identical to the received student identifier and stores the received badge identifier in a badge identifier server memory 158 associated with the student identifier server memory 156.

The foregoing detailed description has set forth various implementations of the devices and/or processes via the use of block diagrams, schematics, and examples. Insofar as such block diagrams, schematics, and examples contain one or more functions and/or operations, it will be understood by those skilled in the art that each function and/or operation within such block diagrams, flowcharts, or examples can be implemented, individually and/or collectively, by a wide range of hardware, software, firmware, or virtually any combination thereof. In one implementation, the present subject matter may be implemented via one or more computers, processor-based systems, and/or processors (*e*.*g*., microprocessors, microcontrollers, central processing units (CPUs), digital signal processors (DSPs), graphics processing units (GPUs), application specific integrated circuits (ASICs), field programmable gate arrays (FPGA), along with non-transitory data storage media (*e*.*g*., non-volatile memory, volatile memory, read only memory (ROM), random access memory (RAM), FLASH memory, EEPROM, registers, magnetic disk drives, optical disk drives, solid state drives), and/or communications subsystems (*e*.*g*., radios, transmitters, receivers and associated antennas, wired and/or optical communications ports and associated drivers or modems). Those skilled in the art will recognize that the parcel locker banks can include one or more processors, non-transitory data storage media, communications subsystems. Those skilled in the art will recognize that the parcel locker banks can include one or more actuators (*e.g*., electric motor, solenoid, pneumatic or hydraulic cylinder, piston and valves, electromagnets, latches and/or locks, which are operable to unlock and/or open a parcel locker door and/or lock or close a parcel locker door of a parcel locker bank, for example in response to signals from the processor(s). Those skilled in the art will recognize that the parcel locker banks, and even individual parcel lockers can include one or more, sensors (*e.g*., sensor to detect state or position of a door, sensor to detect when locker compartment is occupied or emptied), for example a PIR sensor, a weight sensor or load cell, a Reed switch, a contact sensor or switch, position sensor, pressure sensor, temperature sensor, force sensor, IR transmitter receiver pair, etc. The sensors can be communicatively coupled to the one or more processors to provide information or data thereto, which the processor(s) can use to control operation of the parcel locker bank, parcel lockers, or interact with servers and/or with mobile communications devices (*e.g*., users smartphones or tablet computers). Those skilled in the art will recognize that the implementations disclosed herein, in whole or in part, can be equivalently implemented in standard integrated circuits, as one or more computer programs running on one or more computers (*e.g*., as one or more programs running on one or more computer systems), as one or more programs running on one or more controllers (*e.g*., microcontrollers) as one or more programs running on one or more processors (*e.g*., microprocessors), as firmware, or as virtually any combination thereof, and that designing the circuitry and/or writing the code for the software and or firmware would be well within the skill of one of ordinary skill in the art in light of this disclosure.

As suggested previously, it is to be understood that the invention is not limited to student usage or to university application but may apply to various environments where locker banks are installed, including for example for corporate buildings, for hospitals or for residential apartment complexes. The invention can for example apply in a university environment also to university professors, university staff and employees or university visitors, who can be provided with a unique individual identifier and a unique identifying badge.

## Claims

1. A method for dispatching a shipment and picking up the shipment by an individual (130) by operating a locker bank system (98) including a remote server (102) and a locker bank (100) comprising a badge reader (116) configured for reading a badge identifier (134) of an identifying badge (132), a locker bank data storage (120) and at least a locker (106), wherein the locker bank data storage (120) stores a structured Individuals table (121) comprising a set of associated memories including a name memory (122) configured to store a name of an individual, an individual identifier memory (126) configured to store an individual identifier (127) identifying the individual, and a badge identifier memory (128) to store the badge identifier (134), wherein the remote server (102) comprises a set of associated server memories including an individual identifier server memory (156) configured to store the individual identifier identifying the individual, the method comprising the following steps for dispatching the shipment in the locker bank (100):
- capturing a shipment identifier (136) associated with the shipment,
- selecting from the structured Individuals table (121) a name of the individual, and identifying the name memory (122) storing the name of the individual,
- storing the captured shipment identifier (136) in a shipment identifier memory (137) in locker bank data storage (120) and associating the shipment identifier memory (137) with the individual identifier memory (126) associated with the identified name memory (122),
- opening a locker (106), in which the shipment is dispatched,
- associating the shipment identifier memory (137) with the opened locker (106), and
the method further comprising the following steps for picking up the shipment from the locker bank (100):
- reading the identifying badge (132) by the badge reader (116), and capturing the badge identifier (134),
- identifying the badge identifier memory (128) storing the badge identifier (134),
- identifying the shipment identifier memory (137) based on the association with the individual identifier memory (126) and based on the individual identifier memory (126) being associated with the badge identifier memory (128), and
- unlocking the locker (106) based on the association of the locker (106) with shipment identifier memory (137).

2. The method according to claim 1, further comprising the following steps for picking up the shipment from the locker bank (100) if no badge identifier memory (128) storing the badge identifier (134) is identified:
- entering an individual identifier, and
- verifying a match between the entered individual identifier and the individual identifier (127).

3. The method according to claim 2, further comprising the following steps:
- requesting the remote server (102) by the locker bank (100) to send an email to the individual, wherein the requesting includes the individual identifier (127),
- identifying by the remote server (102) the individual identifier server memory (156) storing a value matching the individual identifier (127) included in the request from the locker bank (100),
- generating by the remote server (102) a validation code and sending the validation code to the locker bank (100),
- sending by the remote server (102) a verification email to the individual using an individual email server memory (154) associated with the individual identifier server memory (156), wherein the verification email includes the validation code,
- providing by the individual the validation code to the locker bank (100) for validation,
- storing by the locker bank the captured badge identifier (134) in the badge identifier memory (128) based on the association with the individual identifier memory (126),
- sending the badge identifier (134) stored in the badge identifier memory (128) and the individual identifier (127) stored in the individual identifier memory (126) associated with the badge identifier memory (128) to the remote server (102) communicating with the locker bank (100) via a long-distance communication network (142), and
- identifying by the remote server (102) an individual identifier server memory (156) storing a value identical to the received individual identifier and stores the received badge identifier in a badge identifier server memory (158) associated with the individual identifier server memory (156).

4. The method according to claim 2, further comprising the following steps:
- entering a unique pick-up code received by the individual in a notification email,
- verifying a match between the entered pick-up code and a pick-up code (138) generated following on dispatching the shipment and stored in a pick-up code memory (139) of the locker bank data storage (120),
- storing by the locker bank the captured badge identifier (134) in the badge identifier memory (128) based on the association with the individual identifier memory (126),
- sending the badge identifier (134) stored in the badge identifier memory (128) and the individual identifier (127) stored in the individual identifier memory (126) associated with the badge identifier memory (128) to the remote server (102) communicating with the locker bank (100) via a long-distance communication network (142), and
- identifying by the remote server (102) an individual identifier server memory (156) storing a value identical to the received individual identifier and stores the received badge identifier in a badge identifier server memory (158) associated with the individual identifier server memory (156).

5. The method according to claim 4, further comprising the following steps for dispatching the shipment in the locker bank (100):
- generating by the locker bank the pick-up code (138),
- storing the pick-up code (138) in the pick-up code memory (139),
- associating the pick-up code memory (139) with the locker (106),
- sending to the remote server (102) a message including the shipment identifier (136), the pick-up code (138) and the individual identifier (127), and
- associating by the remote server (102) the individual identifier server memory (156) with a shipment identifier server memory (160) storing the shipment identifier.

6. The method according to claim 5, further comprising sending the notification email to the individual based on the association of the shipment identifier server memory (160) with an individual email server memory (154) configured to store an email address of the individual and included in the set of associated server memories, via the association of the shipment identifier server memory (160) with the individual identifier server memory (156), wherein the notification email includes the pick-up code.

7. A locker bank system for dispatching a shipment and picking up the shipment by an individual (130), the locker bank system including:
a locker bank (100) comprising a locker bank data storage (120) and at least a locker (106), and
a remote server (102) comprising a server storage (150) and communicating with the locker bank (100) via a long-distance communication network (142),
**characterized in that** the locker bank further comprises a badge reader (116) configured for reading a badge identifier (134) of an identifying badge (132),
**in that** the server storage (150) comprises a set of associated memories including a name server memory (152) configured to store a name of the individual, an individual email server memory (154) configured to store an email address of the individual, an individual identifier server memory (156) configured to store an individual identifier (127) identifying the individual, and a badge identifier server memory (158) for the badge identifier (134),
and **in that** the locker bank data storage (120) comprises a structured Individuals table (121) comprising a set of associated memories including a name memory (122) configured to store the name of the individual, an individual identifier memory (126) configured to store the individual identifier (127), and a badge identifier memory (128) for the badge identifier (134).

8. The locker bank system according to claim 7, **characterized in that** the locker bank (100) comprises a processor (104) configured to capture a shipment identifier (136) associated with the shipment, to select from the structured Individuals table (121) a name of the individual, to identify the name memory (122) storing the name of the individual, to store the captured shipment identifier (136) in a shipment identifier memory (137) in locker bank data storage (120) and associating the shipment identifier memory (137) with the individual identifier memory (126) associated with the identified name memory (122), to open a locker (106), and to associate the shipment identifier memory (137) with the opened locker (106).

9. The locker bank system according to claim 8, **characterized in that** the processor (104) is configured to identify the badge identifier memory (128) storing the badge identifier (134) captured by the badge reader (116), to identify the shipment identifier memory (137) based on the association with the individual identifier memory (126) and based on the individual identifier memory (126) being associated with the badge identifier memory (128), and to unlock the locker (106) based on the association of the locker (106) with shipment identifier memory (137).

10. The locker bank system according to claim 9, **characterized in that** the processor (104) is configured to be provided by the individual with an individual identifier via the user interface and to verify a match between the entered individual identifier and the individual identifier (127) stored in the individual identifier memory (126).

11. The locker bank system according to claims 9 or 10, **characterized in that** the processor (104) is configured to receive a unique pick-up code from the individual, to verify a match between the received pick-up code and a pick-up code (138) generated following on dispatching the shipment and stored in a pick-up code memory (139) of the locker bank data storage (120), to store the captured badge identifier (134) in the badge identifier memory (128) based on the association with the individual identifier memory (126), and to send the badge identifier (134) and the individual identifier (127) associated with the badge identifier memory (128) to the remote server (102).

12. The locker bank system according to claims 9 or 10, **characterized in that** the processor (104) is configured to request the remote server (102) to send an email to the individual, wherein the requesting includes the individual identifier (127), to receive from the remote server (102) a validation code generated by the remote server, following on identifying by the remote server (102) the individual identifier server memory (156) storing a value matching the individual identifier (127) included in the request from the locker bank (100), to receive from the individual a validation code sent by the remote server (102) to the individual using the individual email server memory (154) associated with the individual identifier server memory (156), to store by the captured badge identifier (134) read by the badge reader in the badge identifier memory (128) based on the association with the individual identifier memory (126), wherein if a badge identifier corresponding to a previous identifying badge is already stored in the badge identifier memory, the previous badge identifier is over-written with the new badge identifier, and to send to the remote server the badge identifier (134) stored in the badge identifier memory (128) and the individual identifier (127) stored in the individual identifier memory (126) associated with the badge identifier memory (128).

13. The locker bank system according to claims 11 or 12, **characterized in that** the processor (104) is configured to generate the pick-up code (138), to store the pick-up code (138) in the pick-up code memory (139), to associate the pick-up code memory (139) with the locker (106), and to send to the remote server (102) a message including the shipment identifier (136), the pick-up code (138) and the individual identifier (127), wherein the sent message is used by the remote server (102) to associate a shipment identifier server memory (160) storing the shipment identifier with the individual identifier server memory (156) storing the individual identifier used for identifying the individual.

14. The locker bank system according to any one of claims 7 to 13, **characterized in that** the badge reader (116) is contactless, and the badge identifier (134) is unique.

15. The locker bank system according to any one of claims 7 to 14, **characterized in that** the identifying badge (132) is unique and is a virtual badge or an electronic badge.
